# EUROPEAN PATENT APPLICATION

(11) **EP 2 533 603 A1**
(43) Date of publication of application: **12.12.2012**
(21) Application number: 10845082.6
(22) Date of filing: 16.08.2010
(51) Int. Cl.: H04W 88/18, H04L 29/06, H04W 4/16

(54) **METHOD, APPARATUS AND UPLINK SERVICE NODE FOR REALIZING DRIVING SERVECE ON SERVICE SIDE**

(30) Priority: 03.02.2010 CN 201010111060
(71) Applicant: ZTE Corporation, Shenzhen, Guangdong 518057 (CN)
(72) Inventor: WANG, Wei, Shenzhen Guangdong 518057 (CN); LV, Huawei, Shenzhen Guangdong 518057 (CN); JIA, Xia, Shenzhen Guangdong 518057 (CN)
(74) Representative: Bongiovanni, Simone
(86) International application number: PCT/CN2010/076028
(87) International publication number: WO 2011/094999

(57) **Abstract**

Disclosed are a method and apparatus for implementing driving of a service at the serving side and an uplink serving node. The above method comprises: an uplink serving interface module receiving a notification message from a service ability module, wherein the notification message carries interface input parameters; the uplink serving interface module acquiring input parameter information according to the interface input parameters; and the uplink serving interface module calling an interface of a service executing module so as to execute a service procedure instance using the input parameter information, an uplink serving identifier and an uplink serving method identifier. The technical solution provided according to the present invention can meet the requirements of simplifying the service process, thus improving user experience.

## Description

### Field of the Invention

The present invention relates to the communication field, and in particular to a method and apparatus for implementing driving of a service at the serving side and an uplink serving node.

### Background of the Invention

With the continuous development of communication technologies, various value-added services emerge endlessly. With the appearance of a large number of information products, a series of value-added services also arise as the time requires, such as short message, multimedia message, streaming media, positioning, etc. The above various value-added services on the one hand enrich the use requirements of terminal users, and on the other hand effectively increase the income sources of the operators.

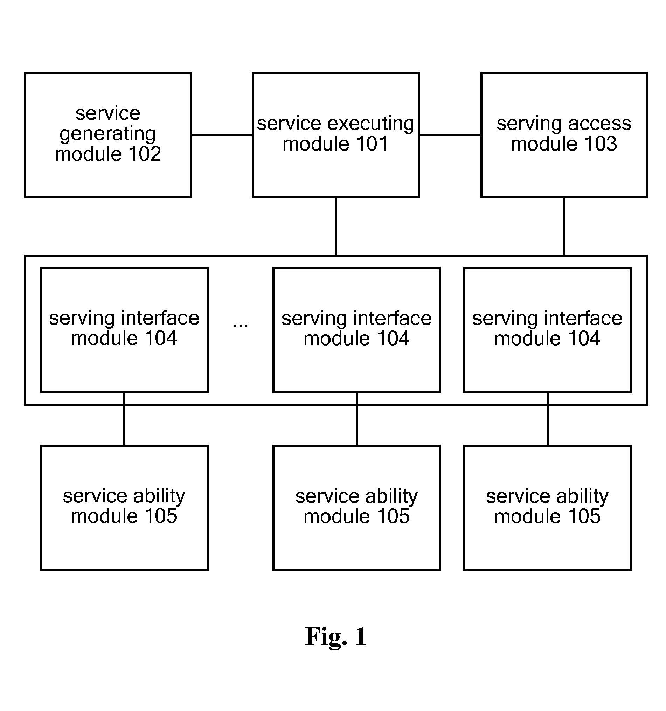

However, the development of conventional value-added services needs to go through complicated and long process of design, development, test, deployment, distribution and sale. Therefore, a service generating system for terminal users emerges. In the above, the service generating system is an environment for the user to create and distribute services in a unified and friendly environment, which simplifies the process of service creation, distribution and sale. The specific architecture of the above service generating system can refer to Fig. 1.

Fig. 1 is a schematic diagram of the architecture of the service generating system. As shown in Fig. 1, this service generating system mainly comprises: a service executing module **101,** a service generating module **102** and a serving access module **103.** Description will be given hereinafter in combination with these modules.

The serving access module **103** is configured to managing and providing the serving needed to compose a service;
the service generating module **102** is configured to managing and providing service information; and
the service executing module **101,** connected to the service generating module **102** and the serving access module **103,** is configured to acquiring corresponding service information from the service generating module **102** when the service is being executed, and calling a corresponding serving interface module **104** which the serving access module **103** accesses according to the related serving nodes when the service procedure is executed using the service procedure information in the correspondingly acquired service information.

In the above, the service procedure generated by the service generating module **102** is a terminal user oriented application which can complete an entire function. It is an executable procedure composed of one or more serving nodes and stored in the service generating module **102.** The service executing module **101** controls the execution of this service according to the procedure of this service. In the above, the running of one service for one time is referred to as a service procedure instance. The attribute of the service includes the input parameters and internal variables of the service procedure.

The serving interface module **104** accessed by the serving access module **103** is a service generating system oriented program interface which is provided by a serving provider, connected with a connection service ability module **105,** and can complete the corresponding service ability. This program interface has one or more methods, referred to as interface method. In the above, the above service ability module **105** is a module corresponding to the serving interface module **104,** and is configured to specifically implementing a certain service, such as short message gateway, integrated service access gateway and multimedia message gateway. The serving interface module **104** can be dynamically registered into the serving access module **103** and become a serving in the service generating system. Then this serving can be included in the service procedure to be a node in the service procedure, which indicates that this serving interface module needs to be executed during the execution of the service procedure. Corresponding to the interface method, one serving has one or more methods so as to complete different operations in the serving, and this method is referred to as the serving method. Each serving method includes input parameter attribute and output parameter attribute. In the serving procedure, the input parameter and output parameter of the serving method need to be bound with the internal variable of the service.

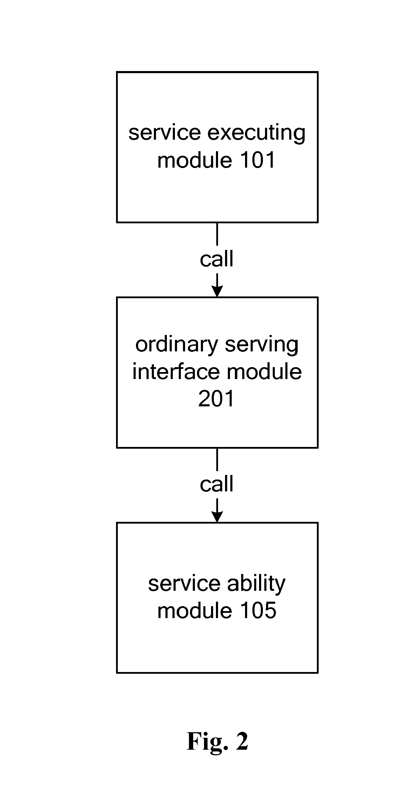

In the service generating system, an ordinary service procedure can be completed by the process of the service executing module **101** calling the corresponding serving interface module **104.** The service executing module calling the serving method in the ordinary serving when executing a corresponding service procedure instance, is implemented by that the service executing module notifies the ordinary serving interface module when executing the corresponding service procedure instance. As shown in Fig. 2, the calling relationship of ordinary serving is as follows: the service executing module **101** calls an ordinary serving interface module **201** when executing a service procedure instance, and the ordinary serving interface module **201** calls the corresponding service ability module **105.**

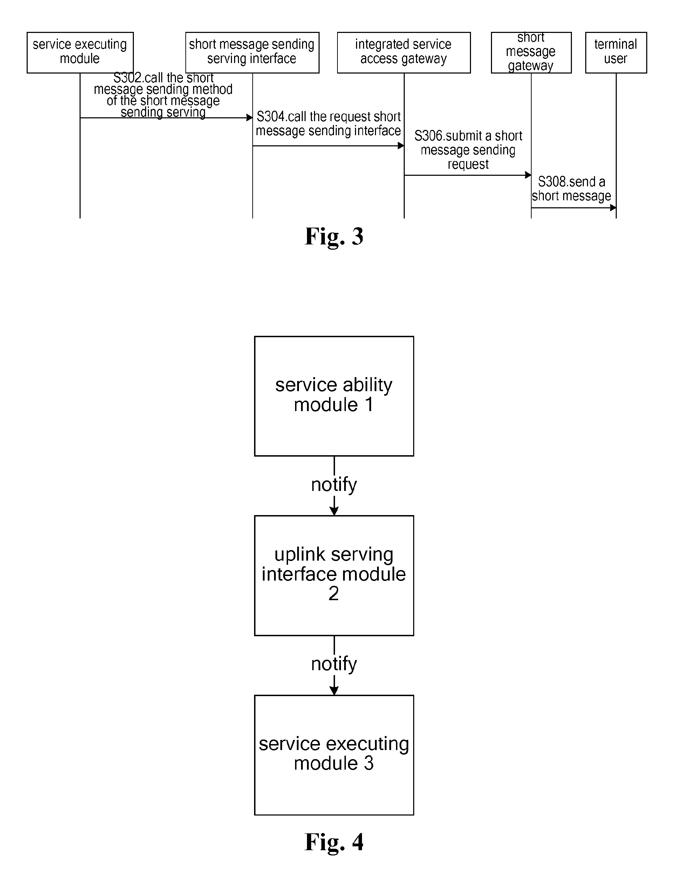

Specifically, the execution procedure of ordinary serving is shown by taking the short message sending serving as an example, as shown in Fig. 3. The execution procedure of this short message sending serving is as follows:
Step S302: the service executing module **101** calls a short message sending method of a short message sending serving interface **301**.
Step S304: the short message sending method of the short message sending serving interface **301** calls a short message sending Web Service interface of an integrated service access gateway **302.**
Step S306: the integrated service access gateway **302** submits a short message sending request to a short message gateway **303.**
Step S308: the short message gateway **303** sends a short message to a terminal user.

However, during its practical implementation, for the scenario where the serving side notifies the service generating system, the above execution procedure cannot meet the needs of service procedure. At the same time, the above serving needs to be provided by the serving provider rather than the system fixedly. Furthermore, the fields of each serving for matching a service and a service procedure instance are different, and are determined by the serving. And, the serving can be used for different service procedures, and serving access and service procedure need to be separated from each other. For this situation, there still lacks a general-purpose method to solve the above problems.

### Summary of the Invention

Regarding the problem in relevant art that there still lacks a general-purpose solution for implementing driving of a service at the serving side, the present invention provides a method, apparatus for implementing driving of a service at the serving side and an uplink serving node so as to solve at least one of the above problems.

A method for implementing driving of a service at the serving side is provided according to one aspect of the present invention.

The method for implementing driving of a service at the serving side according to the present invention comprises: an uplink serving interface module receiving a notification message from a service ability module, wherein the notification message carries interface input parameters; the uplink serving interface module acquiring input parameter information according to the interface input parameters; and the uplink serving interface module calling an interface of a service executing module so as to use the input parameter information, an uplink serving identifier and an uplink serving method identifier to execute a service procedure instance.

An apparatus for implementing driving of a service at the serving side is provided according to another aspect of the present invention.

The apparatus for implementing driving of a service at the serving side according to the present invention comprises: a service ability module, configured to send a notification message to an uplink serving interface module, wherein the notification message carries interface input parameters; the uplink serving interface module, configured to acquire input parameter information according to the interface input parameters and call an interface of a service executing module; and the service executing module, configured to execute a service procedure instance using the input parameter information, an uplink serving identifier, and an uplink serving method identifier.

An uplink serving node is provided according to yet another aspect of the present invention.

The uplink serving node according to the present invention corresponds to at least one uplink serving interface module, wherein the at least one uplink serving interface module is configured to receive a notification message from a service ability module, acquire input parameter information according to interface input parameters carried in the notification message, and call an interface of a service executing module so as to execute a service procedure instance.

By way of the present invention, an uplink serving interface module is provided for receiving a notification message from a service ability module, acquiring input parameter information according to the interface input parameters carried in the notification message; and calling an interface of a service executing module so as to execute a service procedure instance. It solves the problem in relevant art that there still lacks a general-purpose solution for implementing driving of a service at the serving side. A general-purpose solution for implementing driving of a service at the serving side is provided, and thus it can meet the needs of simplifying the service process.

### Brief Description of the Drawings

The drawings illustrated here provide a further understanding of the present invention and form a part of the present application. The exemplary embodiments and the description thereof are used to explain the present invention without unduly limiting the scope of the present invention. In the drawings:
Fig. 1 is a schematic diagram of the architecture of a service generating system in relevant art;
Fig. 2 is a schematic diagram of the calling relationship of an ordinary serving in relevant art;
Fig. 3 is a flowchart of the execution of a short message sending serving in relevant art;
Fig. 4 is a structural block diagram of an apparatus for implementing driving of a service at the serving side according to the embodiments of the present invention;
Fig. 5 is a flowchart of a method for implementing driving of a service at the serving side according to the embodiments of the present invention;
Fig. 6 is a flowchart of the implementation of an uplink serving interface method according to the preferred embodiments of the present invention;
Fig. 7 is a flowchart of the processing of a service executing module receiving an execution notification from an uplink serving interface method according to the preferred embodiments of the present invention;
Fig. 8 is a service procedure diagram of a short message survey service in the service generating system according to the examples of the present invention; and
Fig. 9 is a schematic diagram of a method for implementing driving of a service at the serving side according to the preferred embodiments of the present invention.

### Detailed Description of Embodiments

The present invention will be described hereinafter in detail with reference to the drawings and in conjunction with embodiments. It needs to be noted that the embodiments of the present application and the features thereof can be combined with each other if there is no conflict.

An apparatus for implementing driving of a service at the serving side is provided according to the embodiments of the present invention.

Fig. 4 is a structural block diagram of an apparatus for implementing driving of a service at the serving side according to the embodiments of the present invention. As shown in Fig. 4, the apparatus for implementing driving of a service at the serving side according to the embodiments of the present invention comprises: a service ability module **1,** an uplink serving interface module **2** and a service executing module **3.**

The service ability module **1** is configured to send a notification message to the uplink serving interface module **2,** wherein the notification message carries interface input parameters;
the uplink serving interface module **2,** connected to the service ability module **1,** is configured to acquire input parameter information according to the interface input parameters and calling an interface of the service executing module; and
the service executing module **3,** connected to the uplink serving interface module **2,** is configured to execute a service procedure instance using the input parameter information, an uplink serving identifier, and an uplink serving method identifier.

An uplink serving interface module is introduced into the above apparatus. The above uplink serving interface module is a notification interface provided by the serving provider for implementing the service ability module. The form of interface can be Web Service interface, REST interface, etc. It solves the problem in relevant art that there lacks a general-purpose solution for implementing driving of a service at the serving side for the scenario where the serving side notifies the service generating system, and thus can meet the needs of simplifying the service process.

Preferably, the input parameter information acquired by the above uplink serving interface module includes: a service match code value, an associated code value, and an output parameter value of an uplink serving method.

According to the above input parameter information, the service executing module can effectively find a service procedure instance, execute the same, and provide an internal variable value bound with the return value of the serving method of the uplink serving node. In this way, the process of the above drive service at the serving side can be implemented.

An uplink serving node is provided according to the embodiments of the present invention.

The uplink serving node according to the present invention, being a service node, corresponds to at least one uplink serving interface module, wherein the at least one uplink serving interface module is configured to receive a notification message from a service ability module, acquire input parameter information according to the interface input parameters, and call an interface of a service executing module so as to execute a service procedure instance.

The above service node can be included in the service procedure, which indicates that it needs to wait for the corresponding uplink serving interface module to notify the execution of the service procedure during the service execution. The problem in relevant art that there lacks a general-purpose solution for implementing driving of a service at the serving side for the scenario where the serving side notifies the service generating system can be solved using the above service node. Thus it can meet the needs of simplifying the service process.

Specifically, one service can include one or more identical or different uplink serving nodes. The uplink serving node can be used as a start node of the service procedure and can also be used as an intermediate node of the service procedure. One service procedure can have one or more start nodes, but cannot have the same uplink serving nodes as the start nodes simultaneously or equivalent intermediate nodes. The uplink serving node needs to have an uplink serving identifier, a service match code and an associated code attribute. One uplink serving node can include at least one uplink serving method, and each uplink serving method has a return value attribute in addition to having input parameter and output parameter attributes and the service method identifier of the ordinary service method.

The uplink serving identifier (such as name) is used for uniquely identifying an uplink service, and each uplink service needs to have one uplink serving identifier. The identifiers of different uplink services must be different from each other. During the execution of a service, the uplink serving interface module needs to notify the service executing module of the uplink serving identifier.

The service match code of the uplink serving node is used for uniquely determining a service, and each uplink service needs to have a service match code attribute. During the generation of a service, it is necessary to determine the service match code value of the corresponding uplink serving node of this service. During the execution of the service, the uplink serving interface module notifies the service executing module of the service match code value, and the service executing module carries out the match of a corresponding service. Accordingly, the service procedure including the uplink serving node needs to have a corresponding service match code attribute. That is to say, the number of service match codes of each service is determined by the number of the types of the uplink serving nodes used in this service. That is to say, if one service includes two different uplink serving nodes, then this service needs to have two service match code values. The service match code values of the same uplink serving node of one service must be identical and only one is needed. The service match code value of one uplink serving node of one service cannot be the same as that of the same uplink service of another service. The service match code values of different uplink serving nodes of one service can be identical or different. The service match code values of different uplink serving nodes of different services can be identical or different.

The associated code attribute of the uplink serving node is used for determining a service procedure instance in the situation that a certain service is determined, and each uplink serving node has one or more associated code attributes. During the generation of a service, it is necessary to determine the binding relationship between the associated code attribute of the corresponding uplink serving node and the internal variable of the service. During the execution of the service, the uplink serving interface module needs to notify the service executing module of the associated code value, and the service executing module carries out the match of a corresponding service procedure instance. Accordingly, a service including an uplink serving node needs to have the associated code attribute. That is to say, the associated code attribute of each service is determined by the associated code attribute of the uplink serving node included therein. The associated codes of the same uplink serving node of one service have to be bound with the same service internal variable, and it only needs to carry out this setting once.

Preferably, the attribute information of the above at least one uplink serving method includes but not limited to: uplink serving method identifier information, input parameter attribute information, output parameter attribute information, and return value attribute information.

The uplink serving method identifier is used for uniquely identifying a service method of an uplink service, and each uplink serving method needs to have one uplink serving method identifier. The identifiers of different uplink serving methods of the same uplink service must be different. During the execution of a service, the uplink serving interface module needs to notify the service executing module of the uplink serving method identifier.

The input parameter attribute of the uplink serving method is used by the uplink service interface method to obtain the internal variable value of a relevant service before the execution of the uplink service in the service procedure instance, and each uplink serving method has zero, one or more input parameter attributes. During the generation of a service, it is necessary to determine the binding relationship between the input parameter attribute of the corresponding uplink serving method and the internal variable of the service. During the execution of a service, the uplink serving interface module can obtain from the service executing module the internal variable value bound with the input parameter.

The output parameter attribute of the uplink serving method is used for assigning an associated value in the uplink service interface method to an internal variable in a corresponding service procedure instance, and each uplink serving method has zero, one or more output parameter attributes. During the generation of a service, it is necessary to determine the binding relationship between the output parameter attribute of the corresponding uplink serving method and the internal variable of the service. During the execution of a service, the uplink serving interface module needs to notify the service executing module of the output parameter value, and the service executing module assigns this value to the internal variable bound with the corresponding output parameter.

The return value attribute of the uplink serving method is used by the uplink service interface method to obtain the internal variable value of a corresponding service after the execution of the uplink service in the service procedure instance, and each uplink serving method has zero, one or more return value attributes. During the generation of a service, it is necessary to determine the binding relationship between the return value attribute of the corresponding uplink serving method and the internal variable of the service. During the execution of a service, the uplink serving interface module can from the service executing module obtain the internal variable value bound with the return value.

XML Schema language is the description standard of XML format recommended by the W3C organization. The attributes of the above uplink service can be described using XML, and the representation using Schema is as follows:
<?xml version=" 1.0" encoding="UTF-8"?>
<xs:schema xmlns:xs="http://www.w3.org/2001/XMLSchema">
<!-- type definition -->
<xs:simpleType name="atLeast1CharString">
<xs:restriction base="xs:string">
<xs:minLength value="1"/>
<xs:whiteSpace value="collapse"/>
</xs :restriction>
</xs:simpleType>
<xs:simpleType name="atMost6CharString">
<xs:restriction base="xs:string">
<xs:maxLength value="6"/>
<xs:whiteSpace value="collapse"/>
</xs:restriction>
</xs:simpleType>
<xs:simpleType name="atMost12CharString">
<xs:restriction base="xs:string">
<xs:maxLength value="12"/>
<xs:whiteSpace value="collapse"/>
</xs :restriction>
</xs:simpleType>
<xs:simpleType name="atMost20CharString">
<xs:restriction base="xs:string">
<xs:minLength value="1"/>
<xs:maxLength value="20"/>
<xs:whiteSpace value="collapse"/>
</xs :restriction>
</xs:simpleType>
<xs:simpleType name="atMost40CharString">
<xs:restriction base="xs:string">
<xs:minLength value="1"/>
<xs:maxLength value="40"/>
<xs:whiteSpace value="collapse"/>
</xs :restriction>
</xs:simpleType>
<xs:simpleType name="intFrom1">
<xs:restriction base="xs:int">
<xs:minInclusive value="1"/>
</xs :restriction>
</xs:simpleType>
<xs:simpleType name="intFrom1To99">
<xs:restriction base="xs:int">
<xs:minInclusive value="1"/>
<xs:maxInclusive value="99"/>
</xs :restriction>
</xs:simpleType>
<xs:complexType name="associationIDType">
<xs: sequence>
<xs:element name="associationIDNo"type="intFrom1To99"/>
<xs:elementname="associationIDName"type="atLeast1CharString"/>
<xs:elementname="associationIDNameZh"type="atMost6CharString"/ >
<xs:elementname="associationIDNameEn"type="atMost12CharString" />
<xs:element name="associationIDDescription" type="xs:string"/>
</xs: sequence>
</xs :complexType>
<xs:complexType name="outParameterType">
<xs: sequence>
<xs:element name="paramNo" type="intFrom1To99"/>
<xs:element name="paramName" type="atLeast1CharString"/>
<xs:element name="paramNameZh" type="atMost6CharString"/>
<xs:element name="paramNameEn" type="atMost12CharString"/>
<xs:element name="dataType" type="dataType"/>
<xs:element name="paramDescription" type="xs:string"/>
<xs:element name="paramType" type="paramCategoryType"/>
<xs:element name="paramValues" type="paramValueType" minOccurs="O"/>
</xs:sequence>
</xs :complexType>
<xs:complexType name="returnType">
<xs: sequence>
<xs:element name="returnNo" type="intFrom1To99"/>
<xs:element name="returnName" type="atLeast1CharString"/>
<xs:element name="returnNameZh" type="atMost6CharString"/>
<xs:element name="returnNameEn" type="atMost12CharString"/>
<xs:element name="dataType" type="dataType"/>
<xs:element name="returnDescription" type="xs:string"/>
</xs: sequence>
</xs :complexType>
<xs:simpleType name="paramCategoryType">
<xs:restriction base="xs:string">
<xs:enumeration value="Simple"/>
<xs:enumeration value="Enum"/>
</xs :restriction>
</xs:simpleType>
<xs:simpleType name="dataType">
<xs:restriction base="xs:string">
<xs:enumeration value="String"/>
<xs:enumeration value="Number"/>
<xs:enumeration value="Boolean"/>
<xs:enumeration value="Map"/>
<xs:enumeration value="List"/>
</xs :restriction>
</xs:simpleType>
<xs:complexType name="paramValueType">
<xs: sequence>
<xs:element name="param" maxOccurs="unbounded">
<xs:complexType>
<xs: simpleContent>
<xs:extension base="xs:string">
<xs:attribute name="value" type="xs:string"/>
</xs:extension>
</xs:simpleContent>
</xs :complexType>
</xs:element>
</xs: sequence>
</xs :complexType>
<!-- element definition -->
<xs:element name="serviceName" type="atLeast1CharString"/>
<xs:element name="paramNameZh" type="atLeast1CharString"/>
<xs:element name="paramNameEn" type="atLeast1CharString"/>
<xs:element name="paramName" type="atLeast1CharString"/>
<xs:element name="paramNo" type="intFrom1"/>
<xs:element name="serviceInformation">
<xs: annotation>
<xs:documentation>The information of this service.</xs:documentation>
</us:annotation>
<xs:complexType>
<xs: sequence>
<xs:element ref="serviceName"/>
<xs:element name="serviceDescription" type="xs:string"/>
<xs:element name="displayNameZh" type="atMost6CharString"/>
<xs:element name="displayNameEn" type="atMost12CharString"/>
<xs:element name="applicationIDName" type="atLeast1CharString"/>
<xs:element name="applicationIDDescription" type="xs:string"/>
<xs:element name="association">
<xs:complexType>
<xs: sequence>
<xs:element name="associationID" type="associationIDType" max0ccurs="unbounded"/>
</xs: sequence>
</xs :complexType>
</xs:element>
<xs:element name="attrs" type="AttrType" minOccurs="0"/>
<xs:element name="actions">
<xs:complexType>
<xs: sequence>
<xs:element name="action" type="actionType" maxOccurs="unbounded"/>
</xs: sequence>
</xs :complexType>
</xs:element>
</xs: sequence>
</xs :complexType>
</xs:element>
<xs:complexType name="actionType">
<xs: sequence>
<xs:element name="actionNo" type="intFrom1To99"/>
<xs:element name="actionName" type="atMost20CharString"/>
<xs:element name="actionNameZh" type="atMost20CharString"/>
<xs:element name="actionNameEn" type="atMost20CharString"/>
<xs:element name="isDefault">
<xs:simpleType>
<xs:restriction base="xs:string">
<xs:enumeration value="true"/>
<xs:enumeration value="false"/>
</xs :restriction>
</xs:simpleType>
</xs:element>
<xs:element name="inParams" minOccurs="0">
<xs:complexType>
<xs: sequence>
<xs:element name="inParameter" type="outParameterType" minOccurs="0" maxOccurs="unbounded"/>
</xs: sequence>
</xs :complexType>
</xs:element>
<xs:element name="outParams" minOccurs="0">
<xs:complexType>
<xs: sequence>
<xs:element name="outParameter" type="outParameterType" minOccurs="0" maxOccurs="unbounded"/>
</xs: sequence>
</xs :complexType>
</xs:element>
<xs:element name="returns" minOccurs="0">
<xs:complexType>
<xs: sequence>
<xs:element name="return" type="returnType" minOccurs="0" max0ccurs="unbounded"/>
</xs: sequence>
</xs:complexType>
</xs:element>
</xs: sequence>
</xs:complexType>
<xs:complexType name="AttrType">
<xs: sequence>
<xs:element name="attr" minOccurs="0" max0ccurs="unbounded">
<xs:complexType>
<xs:simpleContent>
<xs:extension base="xs:string">
<xs:attribute name="code" type="atLeast1CharString" use="required"/>
<xs:attribute name="desc" type="xs:string" use="optional"/>
</xs:extension>
</xs:simpleContent>
</xs:complexType>
</xs:element>
</xs: sequence>
</xs:complexType>
</xs:schema>

In the above, the value of node serviceName is used for representing the uplink serving identifier; the value of node applicationIDName is used for representing the name of the service match code attribute of the uplink service; the node associationID is used for representing relevant information of the associated code attribute of the uplink service, wherein the value of child node associationIDName is used for representing the name of the associated code attribute of the uplink service; and the node action is used for representing relevant information of the uplink serving method, wherein the value of child node actionName is used for representing the uplink serving method identifier, the child node inParams is used for representing relevant information of the input parameter attribute of the uplink serving method, the child node outParams is used for representing relevant information of the output parameter information of the uplink serving method, and the child node returns is used for representing relevant information of the return value attribute of the uplink serving method.

For example, the short message uplink service is a service used for receiving the short message sent by the user to the service. The identifier (such as name) of the short message uplink service is SMSUp (short message uplink service), the service match code is ACCESS_CODE (service access node), i.e. the destination number of the short message sent by the user, and the associated code is phoneNum (cell phone number), i.e. the cell phone number of the user who sends the short message. The short message uplink service has a service method which receives short message sending notifications, and the identifier of this service method is notifySmsReception (short message notification method). This service method has no input parameter or return value, and the output parameters are phnNum (cell phone number) and msg (short message content). This uplink serving is registered into the serving access module **103** and it can be described using the following XML.
<?xml version=" 1.0" encoding="UTF-8"?>
<serviceInformation>
<serviceName>SMSUp</serviceName>
<serviceDescription>short message uplink</serviceDescription>
<displayNameZh>short message uplink</displayNameZh>
<displayNameEn>SmsUpService</displayNameEn>
<applicationIDName>ACCESS_CODE</applicationIDName>
<applicationIDDescription>access code</applicationIDDescription>
<association>
<associationID>
   <associationIDNo>1</associationIDNo>
   <associationIDName>phoneNum</associationIDName>
<associationIDNameZh>cell phone number</associationIDNameZh>
<associationIDNameEn>phoneNum</associationIDNameEn>
<associationIDDescription>phoneNum</associationIDDescription>
</associationID>
</association>
<actions>
<action>
<actionNo> 1 </actionNo>
<actionName>notifySmsReception</actionName>
<actionNameZh>notifySmsReception</actionNameZh>
<actionNameEn>notifySmsReception</actionNameEn>
<isDefault>true</isDefault>
<outParams>
<outParameter>
<paramNo>1</paramNo>
<paramName>phnNum</paramName>
<paramNameZh>cell phone number</paramNameZh>
<paramNameEn>phnNum</paramNameEn>
<dataType>String</dataType>
<paramDescription>cell phone number</paramDescription>
<paramType>Simple</paramType>
</outParameter>
<outP arameter>
<paramNo>2</paramNo>
<paramName>msg</paramName>
<paramNameZh>short message content</paramNameZh>
<paramNameEn>msg</paramNameEn>
<dataType>String</dataType>
<paramDescription>short message content</paramDescription>
<paramType>Simple</paramType>
</outParameter>
</outParams>
</action>
</actions>
</serviceInformation>

A method for implementing driving of a service at the serving side is provided according to the embodiments of the present invention.

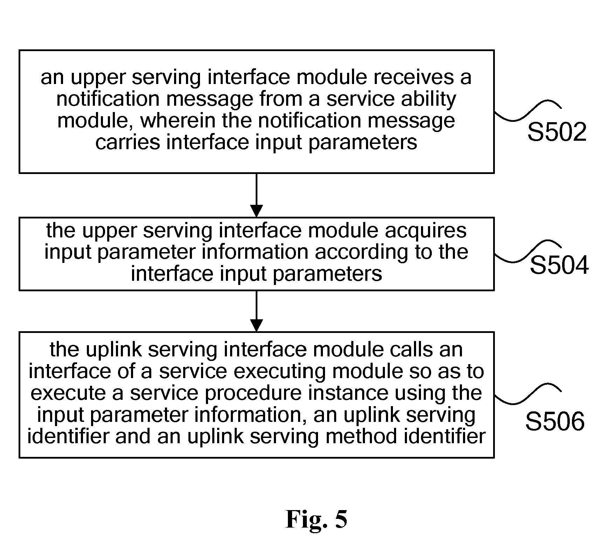

Fig. 5 is a structural block diagram of a method for implementing driving of a service at the serving side according to the embodiments of the present invention. As shown in Fig. 5, the method for implementing driving of a service at the serving side according to the embodiments of the present invention comprises the following processing (steps S502 to S506):
Step S502: an uplink serving interface module receives a notification message from a service ability module, wherein the notification message carries interface input parameters;
Step S504: the uplink serving interface module acquires input parameter information according to the interface input parameters; and
Step S506: the uplink serving interface module calls an interface of a service executing module so as to use the input parameter information, an uplink serving identifier and an uplink serving method identifier to execute a service procedure instance.

The above method uses an uplink serving interface module to implement driving of a service at the serving side. The problem in relevant art that there lacks a general-purpose solution for implementing driving of a service at the serving side for the scenario where the serving side notifies the service generating system is solved. Thus it can meet the needs of simplifying the service process.

Preferably, the above input parameter information includes: a service match code value, an associated code value, and an output parameter value of an uplink serving method.

According to the above input parameter information, the service executing module can effectively find a service procedure instance.

Preferably, after having executed the service procedure instance, it can further comprise the following processing:
(1) the uplink serving interface module receives from the service executing module a bound internal variable value; and
(2) the uplink serving interface module carries out internal processing according to the bound internal variable value.

During practical implementation, after the uplink serving interface module carries out internal processing according to the bound internal variable value, it can further comprise the following processing:
(3) the uplink serving interface module returns a processing result of the internal processing as an interface return value to the service ability module.

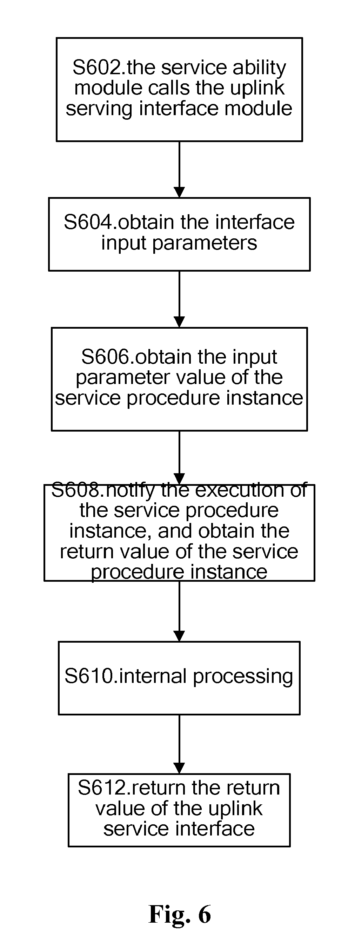

It can be that the above step (3) is not executed, and it depends on the specific practical situation. Specifically, the above processing can refer to Fig. 6.

Fig. 6 is a flowchart of the implementation of an uplink service interface method according to the preferred embodiments of the present invention. As shown in Fig. 6, when the service ability module calls an interface method of the uplink serving interface module, the uplink service interface method needs to carry out the following processing (step S602 to step S612).

Step S602: the service ability module calls a corresponding interface method of the uplink serving interface module.

Step S604: the uplink service interface method obtains the interface input parameters delivered by the service ability module.

Step S606: the uplink service interface method calls the method of the service executing module which obtains the input parameter value of the uplink serving method in the service procedure instance, and obtains the internal variable value of the service procedure instance which is bound with the input parameter attribute of the uplink serving method.

In the above, when calling the method of the service executing module, it needs to provide the uplink serving identifier, service match code value, associated code value and uplink serving method identifier so as to enable the service executing module to determine the service procedure instance and provide the internal variable value of the service procedure instance which is bound with the input parameter attribute of the service method of this uplink serving node.

Step S608: the uplink service interface method calls the method of the service executing module which notifies the execution of the service procedure instance, executes the corresponding service procedure instance, and obtains the internal variable value of the service procedure instance which is bound with the return value attribute of the uplink serving method.

In the above, when calling the method of the service executing module, it needs to provide the uplink serving identifier, service match code value, associated code value, uplink serving method identifier and output parameter value of the uplink serving method so as to enable the service executing module to determine the service procedure instance, and assign the value of the output parameter provided by the uplink serving method to the internal variable of the service procedure instance which is bound with the output parameter attribute of the service method of this uplink serving node.

Step S610: the uplink service interface method carries out relevant internal processing after obtaining the return value of the service procedure instance.

In the above, when carrying out internal processing, the uplink service interface method carries out judgment processing according to the return value of the service procedure instance so as to determine the return value of the uplink service interface method.

Step S612: the uplink service interface method returns the processing result as the interface return value to the service ability module.

Preferably, the execution of the service procedure instance can comprise the following processing.
(1) The service executing module determines a service procedure corresponding to the service match code value in preset service procedures.
(2) The service executing module acquires a node location of an uplink serving node of the determined service procedure according to the uplink serving identifier and the uplink serving method identifier.
(3) The service executing module executes the service procedure instance according to the node location.

Preferably, the above step (3) can further comprise the following processing:
(3.1) when the node location is a start node, the service executing module initiates a new service procedure instance according to the output parameter value of the uplink serving method; and
(3.2) the service executing module executes the new service procedure instance.

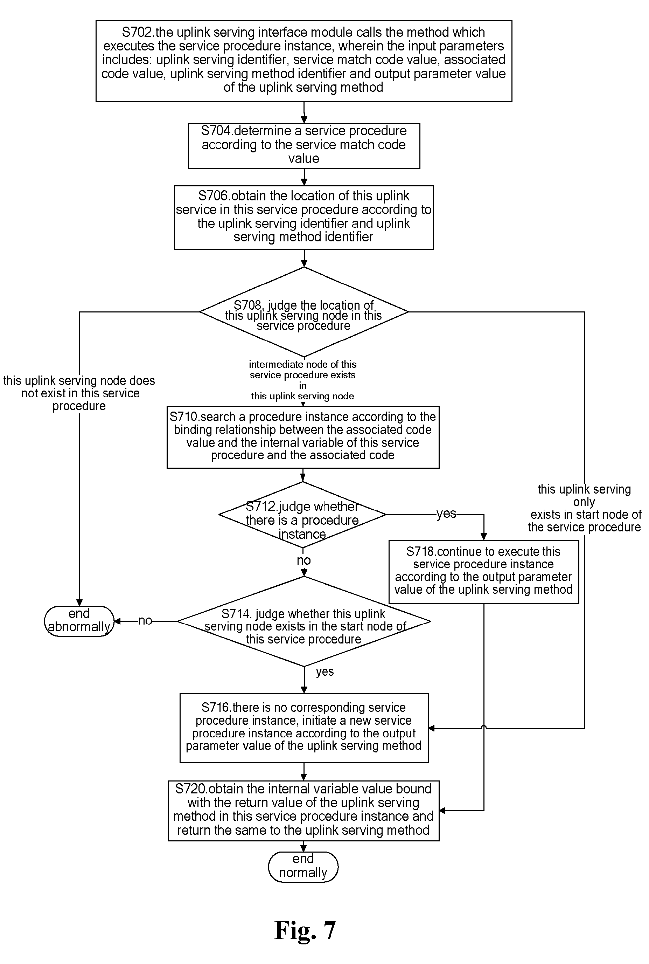

Preferably, the above step (3) can further comprise the following processing:
(3.3) when the node location is an intermediate node, the service executing module searches an internal variable corresponding to an associated code value according to the binding relationship between the internal variable of the service procedure and the associated code value, and searches a service procedure instance matched with the internal variable in the service procedure instances which are corresponding to the service procedure and have not been the executed completely;
(3.4) the service executing module judges whether there is the matched service procedure instance; and
(3.5) if yes, then execute the matched service procedure instance;
(3.6) otherwise, when it is determined that there is an uplink service node in the start node of the service procedure, initiate a new service procedure instance according to the output parameter value of the uplink serving method and executing the same.
(4) The service executing module acquires an internal variable value bound with the return value attribute of the uplink serving node in the service procedure instance. Specifically, the above processing can refer to Fig. 7.

Fig. 7 is a flowchart of the processing of a service executing module receiving an execution notification of the uplink service interface method according to the embodiments of the present invention. As shown in Fig. 7, when the uplink serving interface module calls the method of the service executing module which notifies the execution of the service procedure instance, the service executing module needs to carry out the following processing (steps S702 to S720).

Step S702: the uplink serving interface module calls the method of the service executing module which executes the service procedure instance, wherein the parameters sent by the uplink service interface method to the service executing module includes: an uplink serving identifier, a service match code value, an associated code value, an uplink serving method identifier and an output parameter value of the uplink serving method.

Step S704: the service executing module determines a service procedure according to the service match code value provided by the uplink service interface method.

Step S706: the service executing module obtains the location of this uplink serving node in this service procedure according to the uplink serving identifier and uplink serving method identifier provided by the uplink service interface method.

Step S708: the service executing module judges the location of this uplink serving node in this service procedure; and if this uplink serving node exists in the intermediate nodes of this service procedure, then perform step S710; if this uplink serving node only exists in the start node of this service procedure, then perform step S716; and if this uplink serving node does not exist in this service procedure, then this processing ends abnormally

Step S710: the service executing module searches, from all the procedure instances in the state of waiting, a procedure instance in which the associated code value provided by the uplink serving method matches its internal variable value bound with the associated code value of this uplink serving node, according to the binding relationship between the associated code value provided by the uplink service interface method and the internal variable of this service procedure and the associated code of this uplink serving node.

Step S712: the service executing module judges whether there is a matched procedure instance, and if yes, then perform step S718, otherwise perform step S714.

Step S714: the service executing module judges whether this uplink serving node exists in the start node of this service procedure, and if yes, then perform step S716, otherwise this processing ends abnormally

Step S716: since there is no corresponding service procedure instance, the uplink serving node as the start node notifies the execution of the service, and the service executing module initiates a new service procedure instance according to the output parameter value of the uplink serving method.

Step S718: since the corresponding service procedure instance is found, the service executing module continues to execute this service procedure instance according to the output parameter value of the uplink serving method.

Step S720 the service executing module obtains the internal variable value bound with the return value of the uplink serving method in this service procedure instance and returns the same to the uplink serving method, and the processing ends normally.

By way of the above processing, the service executing module can effectively find a service procedure instance, execute the service procedure instance, and provide the internal variable value bound with the return value of the uplink serving method of the uplink serving node.

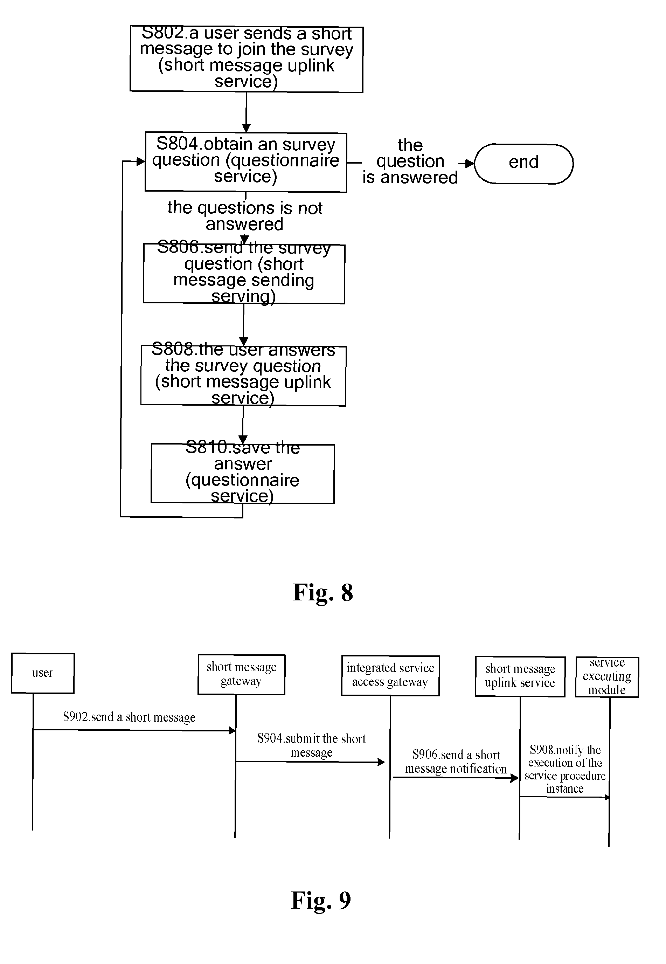

The example of the service executing module executing the service procedure instance in Fig. 7 can refer to Fig. 8. As shown in Fig. 8, a flowchart of implementing a specific service of short message survey service according to the embodiments of the present invention is shown. The short message survey service consists of the above short message sending serving, short message uplink service and questionnaire service. This service has the following internal variables: $ user number, $ survey question, $ survey answer, and the relevant attribute settings of this service are as shown in Table 1.

**Table 1**

| Service procedure attribute type | Service procedure attribute name | | Service procedure attribute value |
|---|---|---|---|
| Service match code | Short message uplink service | Service access code | 106998115 |
| Associated code | Short message uplink service | Sender number | $ user number |

A simple illustrative service procedure of this service in the service generating system is as follows.

Node 802: the short message uplink service is used as the start node to receive a short message sent by a user for joining the short message survey, and the short message survey service is started. In the above, the output parameter, sender number, of the short message notification method of the short message uplink service is bound with the internal variable "$ user number" of the service.

Node 804: the survey question acquisition method of the questionnaire service is used to obtain an survey question. In the above, the input parameter, informant, of the survey question acquisition method of the questionnaire service is the internal variable "$ user number" of the service. The output parameter, survey question, is bound with the internal variable "$ survey question" of the service.

Node 806: the short message sending method of the short message sending serving is used to send the survey question. In the above, the input parameter, destination number, of the short message sending method of the short message sending serving is the internal variable "$ user number" of the service, and the short message content is the internal variable of the service "$ survey question".

Node 808: the short message notification method of the short message sending serving is used to receive the answer of the survey question. In the above, the output parameter of the short message notification method of the short message uplink service, short message content, is bound with the internal variable of the service "$ survey answer".

Node 810: the answer saving method of the questionnaire service is used to save the answer of the survey question. In the above, the input parameter of the answer saving method of the questionnaire service, informant, is the internal variable of the service "$ user number", the survey question is the internal variable of the service "$ survey question", and the survey answer is the internal variable of the service "$ survey answer".

Regarding uplink service (such as short message uplink service), the service executing module executes a service procedure instance according to a predetermined service procedure and provides the obtained internal variable value of the service to the uplink serving interface module.

Fig. 9 is a schematic diagram of a method for implementing driving of a service at the serving side according to the preferred embodiments of the present invention. As shown in Fig. 9, the execution procedure of the short message uplink service can comprise the following processing (steps S902 to S908).

Step S902: a terminal user sends a short message to the short message gateway, wherein the destination number of the short message is the service access code.

Step S904: the short message gateway forwards the short message to the integrated service access gateway according to the destination number of the short message.

Step S906: the integrated service access gateway calls the short message notification Web Service interface of the short message uplink service according to the destination number of the short message.

Step S908: the short message notification method in the short message uplink service calls the interface of the service executing module to notify the execution of the service procedure instance.

The above embodiment takes the short message uplink service as an example. During practical implementation, the above execution procedure can be further applied to other uplink services, such as multimedia message uplink service, and call uplink service.

In summary, by way of the above embodiments provided by the present invention, for the scenario where the serving side notifies the service generating system, a general-purpose solution for implementing driving of a service at the serving side is provided. Thus, it can meet the requirements of simplifying the service (such as value-added service) process, and thereby improve user experience.

Obviously, those skilled in the art should understand that the above module or steps of the present invention can be implemented using a general-purpose computing apparatus. They can be integrated on a single computing apparatus or distributed over a network consisted of multiple computing apparatus. Optionally, they can be implemented using computing apparatus executable program code. Thus, they can be stored in a storage device for being executed by the computing apparatus. In some cases, the shown or described steps can be performed in an order different from the order here. Or, they can be made into various integrated circuit modules respectively; or some modules or steps therein are made into a single integrated circuit module for implementation. In this way, the present invention is not limited to any particular combination of hardware and software.

Above description is only to illustrate the preferred embodiments but not to limit the present invention. Various alternations and changes to the present invention are apparent to those skilled in the art. The scope defined in claims shall comprise any medication, equivalent substitution and improvement within the spirit and principle of the present invention.

## Claims

1. A method for implementing driving of a service at a serving side, **characterized by** comprising:
an uplink serving interface module receiving a notification message from a service ability module, wherein the notification message carries interface input parameters;
the uplink serving interface module acquiring input parameter information according to the interface input parameters; and
the uplink serving interface module calling an interface of a service executing module so as to use the input parameter information, an uplink serving identifier and an uplink serving method identifier to execute a service procedure instance.

2. The method according to Claim 1, **characterized in that** the input parameter information comprises:
a service match code value, an associated code value, and an output parameter value of an uplink serving method.

3. The method according to Claim 2, **characterized in that** executing the service procedure instance comprises:
the service executing module determining a service procedure corresponding to the service match code value in preset service procedures;
the service executing module acquiring a node location which determines an uplink serving node in the service procedure according to the uplink serving identifier and the uplink serving method identifier;
the service executing module executing the service procedure instance according to the node location; and
the service executing module acquiring an internal variable value bound with a return value attribute of the uplink serving method in the service procedure instance.

4. The method according to Claim 3, **characterized in that** the service executing module executing the service procedure instance according to the node location comprises:
when the node location is a start node, the service executing module initiating a new service procedure instance according to the output parameter value; and
the service executing module executing the new service procedure instance.

5. The method according to Claim 3, **characterized in that** the service executing module executing the service procedure instance according to the node location comprises:
when the node location is an intermediate node, the service executing module searching an internal variable corresponding to the associated code value according to the binding relationship between the associated code value and the internal variable of the service procedure, and searching a service procedure instance matched with the internal variable in the service procedure instances which are corresponding to the service procedure and have not been the executed completely; and
the service executing module judging whether there is the matched service procedure instance; and
if yes, then executing the matched service procedure instance;
otherwise, when it is determined that there is the uplink serving interface method in a start node of the service procedure, initiating a new service procedure instance according to the output parameter value and executing the new service procedure instance.

6. The method according to any one of Claims 1-5, **characterized by**, after executing the service procedure instance, comprising:
the uplink serving interface module receiving from the service executing module the bound internal variable value;
the uplink serving interface module carrying out internal processing according to the bound internal variable value; and
the uplink serving interface module returning a processing result of the internal processing as an interface return value to the service ability module.

7. An apparatus for implementing driving of a service at the serving side, **characterized by** comprising:
a service ability module, configured to send a notification message to an uplink serving interface module, wherein the notification message carries interface input parameters;
the uplink serving interface module, configured to acquire input parameter information according to the interface input parameters and call an interface of a service executing module; and
the service executing module, configured to execute a service procedure instance using the input parameter information, an uplink serving identifier, and an uplink serving method identifier.

8. The apparatus according to Claim 7, **characterized in that** the input parameter information acquired by the uplink serving interface module comprises:
a service match code value, an associated code value, and an output parameter value of an uplink serving method.

9. An uplink serving node, **characterized in that** the uplink serving node corresponds to at least one uplink serving interface module, wherein the at least one uplink serving interface module is configured to receive a notification message from a service ability module, acquire input parameter information according to interface input parameters carried in the notification message, and call an interface of a service executing module so as to execute a service procedure instance.

10. The uplink serving node according to Claim 9, **characterized in that** attribute information of the uplink serving node comprises:
uplink serving identifier information, service match code attribute information, associated code attribute information, and attribute information of at least one uplink serving method; and
the attribute information of at least one uplink serving method comprises:
uplink serving method identifier information, input parameter attribute information, output parameter attribute information, and return value attribute information.
